# EUROPEAN PATENT APPLICATION

(11) **EP 4 042 871 A1**
(43) Date of publication of application: **17.08.2022**
(21) Application number: 19948468.4
(22) Date of filing: 10.10.2019
(51) Int. Cl.: A21D 2/00, C02F 1/38, C02F 1/42

(54) **METHOD FOR OBTAINING A BREAD DOUGH, SYSTEM FOR CARRYING OUT THE METHOD AND BREAD DOUGH OBTAINED BY THE METHOD**

(71) Applicant: Sandwicheria Delicatessen SL, 28223 Pozuelo De Alarcón (Madrid) (ES)
(72) Inventor: REGO GARCIA DE ALBA, Luis, Felipe, 28223 Pozuelo De Alarcón (Madrid) (ES)
(74) Representative: Herrero & Asociados, S.L.
(86) International application number: PCT/ES2019/070688
(87) International publication number: WO 2021/069765

(57) **Abstract**

The present invention relates to a process for obtaining a bread dough, to the system for carrying out this process and to the bread dough thus obtained. The process of the invention reduces the time taken to obtain the product.

## Description

The present invention relates to a process for obtaining a bread dough, to the system for carrying out this process and to the bread dough thus obtained. The process of the invention reduces the time taken to obtain the product.

### Background to the invention

Traditional bread making processes involve long fermentation and baking times. In these processes all bread ingredients are added at the initial mixing stage, mixed into a dough and fermented for a relatively long period of time, allowing for maximum dough conditioning and proper development of flavours and aromas.

However, long fermentations are costly as they are time-consuming and labourintensive, require large fermentation areas as well as skilled supervisory staff.

Therefore, there has always been interest and numerous methods have been developed to shorten the fermentation time.

Patent US4500548 has found that conventional baked goods based on yeasts of the species *Sacchoromyces cereviseae* can be prepared using a significantly reduced fermentation time without loss of texture, flavour or aroma characteristic of a similar baked good prepared using the full fermentation period. This can be achieved by adding to the dough of the baked goods an amount of a product effective in reducing the fermentation time comprising a dry leaven residue prepared by a process comprising fermenting a mixture comprising flour, sugar, water and a yeast of the species *Saccharomyces cereviseae* for a period of time sufficient to lower the initial pH below a pH of approximately 4.75. This acidic pH affects the taste of the bread.

In commercial and industrial bread production processes, it would be very important to reduce and control the fermentation times in order to obtain a spongy bread with no change in aroma or flavour, and therefore there is a need to develop such procedures.

### Description of the invention

The present invention relates to a process for obtaining a bread dough that achieves a reduction in fermentation time and baking time. The fermentation time can be reduced by up to 50%, as can the baking time. This time reduction is very important in the production process. The time reduction is due to the presence of a treated water as explained in the present invention.

The water used in the process of the invention is passed through a filter to reduce the amount of micro-organisms and then through a vortex generator column, in addition to which the water must be brought into contact with ceramic particles.

Ceramic particles produce a vibrational resonance with water, which they copy, also serve as a catalyst to enhance natural water processes, provide powerful disinfectant properties, ionise water naturally, activate water energetically, reduce the size of molecular clusters in water.

In the present invention, treated water refers to tap water that has been passed through a filter, a vortex column and a ceramic particle column.

Therefore, a first object of the invention is a process for obtaining a bread dough comprising the following steps:
a) Treating water through a filter that reduces the amount of micro-organisms;
b) Generate at least three vortices in the filtered water obtained in step a);
c) Bringing water into contact with ceramic particles;
d) Mix the water obtained in step c) with flour and sourdough and/or yeast.
e) Ferment.

In order to carry out the procedure of the invention, a system has been developed to transport the water through a filter and to form vortices in the water and bring it into contact with the ceramic particles. The vortices in the water are formed by introducing the water, once it has passed through a filter, through a tube inside a column. This tube concentric to the column through which the pressurised water circulates has a lower height than the column to allow the water to exit into the annular space that is present between the wall of the column and the inner tube. The annular space is filled with ceramic particles between which the water flows before exiting the vortex-forming column.

Therefore, a second aspect of the invention relates to a system for carrying out the process of the invention comprising the following elements:
a) a first section of pipe connecting the water intake to a filter;
b) a filter;
c) a second pipe section connecting the filter outlet to a vortex generator column,
d) the vortex generating column comprises in turn: a water inlet, an inner central tube concentric to the outer wall of the column with vortex creating elements, in the space between the wall of the column and the central tube there are ceramic particles, located between two upper and lower filters, and a water outlet.

A third aspect of the invention is a bread dough obtained in the process of the present invention.

### Brief description of the drawings

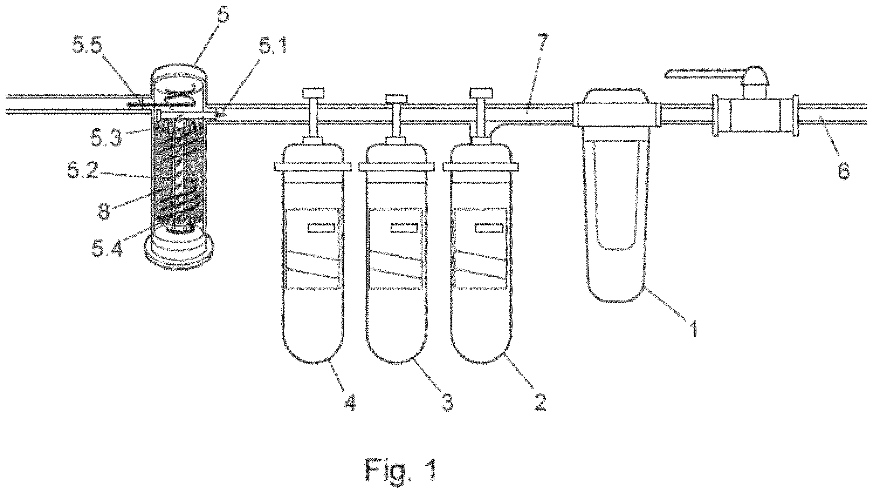

Figure 1 shows a schematic of one embodiment of the system of the invention.

### Description of a preferred embodiment

As stated above, the first aspect of the invention relates to a process for obtaining a bread dough comprising the following steps:
a) Treating water through a filter that reduces the amount of micro-organisms;
(b) Generate at least three vortices in the filtered water obtained in step (a);
(c) Bringing the water into contact with ceramic particles;
(d) Mix the water obtained in step (c) with flour and sourdough and/or yeast.
(e) Ferment.

As will be seen in the examples accompanying the present invention, it has been proven that the treatment given to the water by passing it through a filter, generating at least three vortices in it and putting it in contact with ceramic particles reduces the fermentation and baking times of the bread. By way of hypothesis, the applicant believes that the water changes its structure when treated in the present invention and this fact means that once it is incorporated into the dough, the leavening and baking times are reduced.

In a particular embodiment, the step of generating at least three vortices in the water filtered in step a) is performed by the following sub-steps: driving the filtered water through an inner tube concentric to the wall of a vortex generating column from the top to the bottom of the tube and bringing the water exiting from the bottom of the inner tube and up through the annular space into contact with the ceramic particles. After passing through the ceramic particles, the water exits the vortex column. In one particular embodiment, the interior of the concentric inner tube has vertical channels that favour the formation of the vortices. In a particular embodiment the vortices formed inside the column are three.

Once the water has left the column it is mixed with flour and sourdough and/or yeast. In a particular embodiment the water used in the sourdough is water that has been treated as in the process of the invention, i.e. it has been filtered, at least three vortices have been generated in it and it has been put in contact with ceramic particles.

In a particular embodiment in step d) it is also mixed with oil. In a particular embodiment, water is mixed with flour, oil, sourdough and yeast.

Once the bread dough has risen, it is ready for baking in less time than usual. As can be seen in the example of the invention in a puccia type bread, as defined in the example with baking between 400°C and 500°C the baking time is reduced from 8-10 minutes to 2-3 minutes.

A second aspect of the invention relates to a system for carrying out the process of the invention comprising the following elements:
a) a first pipe section (6) connecting the water inlet to a filter (1);
b) the filter (1);
c) a second section (7) of tubing connecting the filter outlet to a vortex generating column (5),
d) the vortexgenerating column (5) comprises in turn: a water inlet to the column (5.1), an inner central tube (5.2) with vortex creating elements, concentric to the outer wall of the column (5), in the space between the column wall and the central tube there are ceramic particles (8), located between two upper (5.3) and lower (5.4) filters, and a water outlet (5.5).

In one particular embodiment, the vortex-creating elements are channels inside the concentric inner tube.

A third aspect of the invention is a bread dough obtained in the process of the present invention.

### EXAMPLES

The following examples are for illustrative purposes only and are not to be construed as limiting the invention.

### Example 1

First the sourdough was made.

Before starting, the water used in the sourdough was prepared. It was taken from tap water, passed through a carbon filter, then passed through a vortex-forming column defined in the present invention. This water was used to prepare the sourdough and the dough of the invention.

On the first day, 200g of whole wheat flour was mixed with 200g of water as defined in the present invention at room temperature and left to stand for 24 hours.

On the second day, 200g of whole wheat flour was mixed with 200g of water as defined in the present invention at room temperature and left to stand for 24 hours.

On the third day, half of the dough present was discarded and mixed with 400g of whole wheat flour and 400g of water as defined in the present invention, at room temperature with the remaining dough. Allow to stand for 24 hours.

On the fourth day, all but 400g of the dough was discarded and mixed with 400g of wheat flour and 400g of the water defined in the present invention, at room temperature. Allow to stand for 24 hours.

On the fifth day, all but 400g of the dough was discarded and mixed with 400g of wheat flour and 400g of the water defined in the present invention, at room temperature.

The sourdough was used to prepare the bread dough with the following composition.

**Table 1 Composition of the mass**

| Ingredient | Mass |
|---|---|
| Flour | 2530 gr |
| Water | 1430 ml |
| Sourdough | 540 gr |
| Salt | 60 g |
| Olive oil | 150 ml |
| Fresh yeast | 50 gr |
| Total mass | 4760 gr |

Knead all the ingredients together, roll the dough into portions (30 portions for these mixed quantities), and leave to rest in a proofing machine.

Bake the dough for two minutes at a temperature of 450°C.

### Example 2. Comparative example

This second comparative example was carried out in exactly the same way as example 1, but using tap water that was not passed through the filter or the vortex generator column. The proofing times were doubled compared to example 1 and the baking time was seven minutes to obtain a bread with the same appearance and consistency as in example 1.

## Claims

1. A process for obtaining a bread dough comprising the following steps:
(a) treating water through a filter that reduces the amount of micro-organisms;
(b) generate at least three vortices in the filtered water obtained in step (a);
(c) bringing water into contact with ceramic particles;
(d) mixing the water obtained in step (c) with flour and sourdough and/or yeast
(e) ferment.

2. The process of obtaining a bread dough according to claim 1 wherein step b) of generating at least three vortices in the water filtered in step a) is performed by the following sub-steps: driving the filtered water through an inner tube concentric to the wall of a vortex generating column from the top to the bottom of the tube; and bringing the water exiting the bottom of the inner tube and rising through the annular space defined by the wall of the column and the concentric tube into contact with the ceramic particles.

3. The process of obtaining a bread dough according to claim 1 to 2, **characterised in that** the inside of the concentric inner tube has vertical channels that favour the formation of vortices.

4. The process of obtaining a bread dough according to claim 1 to 3, **characterised in that** the vortices formed within the column are three.

5. The process of obtaining a bread dough according to claims 1 to 4, **characterised in that** the water used in the sourdough is water that is treated before use through a filter to reduce the amount of micro-organisms; at least three vortexes are generated in the filtered water and the water is brought into contact with ceramic particles.

6. The process of obtaining a bread dough according to claim 1 to 5, **characterised in that** in step d) it is also mixed with oil.

7. System comprising the following elements:
a) a first pipe section (6) connecting the water inlet to a filter (1);
b) the filter (1);
c) a second section (7) of tubing connecting the filter outlet to a vortexgenerating column (5),
d) the vortex generating column (5) comprises in turn: a water inlet to the column (5.1), an inner central tube (5.2), with vortex creating elements, concentric to the outer wall of the column (5), in the space between the column wall and the central tube there are ceramic particles (8), located between two upper (5.3) and lower (5.4) filters, and a water outlet (5.5).

8. System according to claim 7 **characterised in that** the vortex creation elements are channels inside the concentric inner tube.

9. A bread dough obtained by the process defined in claim 1 to 6.
